# EUROPEAN PATENT SPECIFICATION

(11) **EP 4 313 626 B1**
(45) Date of publication and mention of the grant of the patent: **07.05.2025**
(21) Application number: 22717269.9
(22) Date of filing: 31.03.2022
(51) Int. Cl.: D02G 3/48, B60C 9/00, B60C 9/22, B60C 9/04

(54) **TYRE FOR VEHICLE WHEELS**
REIFEN FÜR FAHRZEUGRÄDER
PNEUMATIQUES POUR ROUES DE VEHICULE

(30) Priority: 01.04.2021 IT 202100008153
(43) Date of publication of application: 07.02.2024
(73) Proprietor: Pirelli Tyre S.p.A., 20126 Milano (IT)
(72) Inventor: AGRESTI, Simone, 20126 Milano (IT); CARACINO, Paola, 20126 Milano (IT); HANEL, Thomas, 20126 Milano (IT); RAMPANA, Barbara, 20126 Milano (IT)
(74) Representative: Porta & Consulenti Associati S.p.A.
(86) International application number: PCT/IB2022/052996
(87) International publication number: WO 2022/208420

(56) References cited:
- EP-A1- 2 708 380
- EP-A1- 3 753 965
- WO-A1-2009/052844
- WO-A1-2020/128934
- DE-A1- 102010 017 107
- DE-A1- 102012 108 523

## Description

The present invention relates to a textile reinforcing cord and to a tire for vehicle wheels.

The tyre of the invention is, preferably, a tyre for wheels of sports automobiles, in particular high and ultra-high performance automobiles.

Tyres for high and ultra-high performance automobiles, commonly defined as "HP" or "UHP" tyres, are in particular those that allow speeds of over 190 km/h, up to more than 300 km/h, to be reached. Examples of such tyres are those carrying speed codes "T", "U", "H", "V", "Z","W", "Y", according to the E.T.R.T.O.. (European Tyre and Rim Technical Organisation) standard and racing tyres, in particular for high-powered four-wheeled vehicles. Typically, tyres that carry the aforementioned speed codes have a section width equal to or greater than 185 mm, preferably comprised between 195 mm and 385 mm, more preferably comprised between 195 mm and 355 mm. Such tyres are preferably mounted on rims having fitting diameters equal to or greater than 13 inches, preferably not greater than 24 inches, more preferably comprised between 16 inches and 23 inches.

The tyre of the invention can, however, be used in vehicles other than the aforementioned automobiles, for example in high-performance sports motorcycles.

The tyre of the invention comprises one or more structural components containing textile reinforcing cords including filaments made of recycled plastic material.

### PRIOR ART

Textile reinforcing cords intended to be used in tyres for vehicle wheels and comprising filaments made of recycled plastic material are described for example in EP 2576245 B1. They are in particular reinforcing cords comprising two yarns twisted together, one of which comprising filaments made of recycled PET. It is provided for the other yarn to comprise filaments made of a non-recycled plastic material, like for example nylon, aramid, Arselon, PEEK or polyketone (POK).

WO 2020254215 A1 describes textile reinforcing cords for tyres made by twisting a yarn comprising filaments made of recycled PET with a yarn comprising filaments made of nylon.

Another type of textile reinforcing cord comprising filaments made of recycled plastic material and intended to be used in tyres for vehicle wheels is described in EP 2708380 B1. Such a reinforcing cord comprises at least one yarn comprising both filaments made of bio-based PET and filaments made of recycled PET. Such a yarn can be twisted with another yarn having filaments that can be made of bio-based PET or other textile materials, preferably nylon.

EP 3753965 A1 describes a reinforcement elastomeric product, in particular for a vehicle tire, comprising fibers made of regenerated polyethylene terephthalate (PET).

US 20150174961 A1 describes a reinforcement elastomeric cord, in particular for a vehicle tire, comprising at least one yarn made from polyethylene furanate (PEF) which is produced entirely or at least in part from biomasses and/or renewable raw material.

WO 2009/052844 A1 describes a textile reinforcing element for at least one structural element of a tyre. In an embodiment thereof, the textile reinforcing element comprises at least two hybrid multifilament yarns twisted together, namely a nylon multifilament yarn and an aramide multifilament yarn. The filaments of each one of the first and said second multifilament yarns are least partially intermixed with each other.

### SUMMARY OF THE INVENTION

Throughout the present description and in the following claims, when reference is made to certain values of angles, they are deemed to be absolute values, i.e. both positive values and negative values with respect to a reference plane or direction, unless specified otherwise.

Furthermore, when reference is made to any range of values comprised between a minimum value and a maximum value, the aforementioned minimum and maximum values are deemed to be included in the aforementioned range, unless expressly stated to the contrary.

Furthermore, all of the ranges include any combination of the described minimum and maximum values and include any intermediate range, even if not expressly described specifically.

Even if not expressly indicated, any numerical value is deemed to be preceded by the term "about" to also indicate any numerical value that differs slightly from the one described, for example to take into account the dimensional tolerances typical of the field of reference.

Hereinafter, the following definitions apply.

The term "equatorial plane" of the tyre is used to indicate a plane perpendicular to the rotation axis of the tyre and that divides the tyre into two symmetrically equal parts.

The terms "radial" and "axial" and the expressions "radially inner/outer" and "axially inner/outer" are used with reference to a direction substantially parallel to the equatorial plane of the tyre and to a direction substantially perpendicular to the equatorial plane of the tyre, respectively, i.e. to a direction substantially perpendicular to the rotation axis of the tyre and to a direction substantially parallel to the rotation axis of the tyre, respectively.

The terms "circumferential" and "circumferentially" are used with reference to the direction of annular extension of the tyre, i.e. to the rolling direction of the tyre, which corresponds to a direction lying on a plane coinciding with or substantially parallel to the equatorial plane of the tyre.

The term "substantially axial direction" is used to indicate a direction inclined, with respect to the equatorial plane of the tyre, by an angle comprised between 70° and 90°.

The term "substantially circumferential direction" is used to indicate a direction oriented, with respect to the equatorial plane of the tyre, at an angle comprised between 0° and 10°.

The term "elastomeric material" or "elastomer" is used to indicate a material comprising a vulcanizable natural or synthetic polymer and a reinforcing filler, wherein such a material, at room temperature and after having been subjected to vulcanization, can have deformations caused by a force and is capable of quickly and energetically recovering the substantially original shape and dimensions after the elimination of the deforming force (according to the definitions of standard ASTM D1566-11 Standard Terminology Relating To Rubber).

The expression "reinforcing cord", or more simply "cord" is used to indicate an elongated element consisting of one or more elongated elements (also identified as "yarns") optionally coated with, or embedded in, a matrix of elastomeric material.

Hereinafter, the expression "yarn" will be used to refer to an elongated element consisting of the aggregation of a plurality of textile filaments.

Each filament can also be called "fiber".

The term "linear density" or "count" of a cord or of a yarn or of a plurality of filaments is used to indicate the weight of the cord or of the yarn or of the plurality of filaments per unit length. The linear density can be measured in dtex (grams per 10 km of length).

The yarns can have one or more "ends", where the term "end" is used to indicate a bundle of filaments twisted together. For example, a single end or at least two ends twisted together can be foreseen.

The yarns can be identified with a symbol that represents the textile material, the count of the fiber used and the number of ends that form the yarn. For example, a yarn with ends made of PET (polyethylene terephthalate) identified with PET 1672 indicates a yarn comprising fibers made of PET with count 1670 dtex, formed of two ends twisted together.

The term "texturized yarn" (or commingled) is used to indicate a yarn comprising a plurality of cross sections wherein the filaments made of a first material are at least partially mixed with filaments made of a second material different from the first material. The texturized yarn is obtained from two ends of different material. Such ends are subjected to a texturization process aimed at obtaining the mixing of the various filaments. Such a process is carried out in a suitable device, like for example an airjet device. Texturization is therefore a process different from twisting, where on the other hand the filaments of one end wind on the filaments of the other end without mixing with the latter.

In this description, two materials are deemed different also when one is a recycled material and the other is a corresponding non-recycled material. Therefore, for example, a recycled PET is a material different from a non-recycled PET.

The term "over-delivery" (OD%) is used to indicate the percentage difference (i.e. the difference multiplied by 100) between the feeding speed of a yarn to the airjet device and the exit speed of the texturized yarn from the airjet device, such an exit speed being equal to the winding speed of the yarn on a reel.

The term "recycled plastic material" is used to indicate a plastic material obtained from refuse or industrial waste products made of a corresponding plastic material typically even if not necessarily of fossil origin and subjected to suitable mechanical and/or chemical and/or thermal treatments to be able to then give rise to re-usable products.

The term "non-recycled plastic material" is used to indicate a plastic material of fossil origin and/or bio-based.

The term "environmental sustainability" of a reinforcing cord is used to indicate the lower environmental impact of the reinforcing cord with respect to other reinforcing cords, the performance being equal.

Hereinafter, when reference is made to a percentage of product made of recycled material, we refer to the weight of such a product with respect to the weight of the yarn that incorporates such a product. Therefore, for example, a 65% recycled yarn indicates a yarn in which 65% of the total weight of the yarn is produced from recycled material and the remaining 35% of the weight of the yarn is produced from non-recycled material.

Hereinafter, when reference is made to a percentage of bio-sustainable product, we refer to the weight of the recycled material plus the weight of any material of biological origin with respect to the weight of the yarn that incorporates such a product. Therefore, for example, an 85% bio-sustainable yarn indicates a yarn in which 85% of the total weight of the yarn is produced from recycled material plus any material of biological origin, and the remaining 15% of the weight of the yarn is produced from non-recycled material of fossil origin. In the absence of material of biological origin, the percentage of bio-sustainable product is equal to that of product made of recycled material.

The terms "breaking load" and "elongation at break" of a reinforcing cord or of a yarn are used to respectively indicate the load and the percentage elongation at which the reinforcing cord or the yarn breaks, evaluated in accordance with the BISFA standard relating to the material subjected to testing according to the definition given below.

The term "modulus" is used to indicate the ratio between load (or force) and elongation measured at any point of a load-elongation curve according to the BISFA standard relating to the material subjected to testing according to the definition given below. Such a curve is drawn by calculating the first derivative of the load-elongation function that defines the aforementioned curve, normalized to the linear density expressed in Tex. The modulus is therefore expressed in cN/Tex or Mpa. In a load-elongation graph, the modulus is identified by the slope of the aforementioned curve with respect to the X-axis.

The term "tenacity" of a reinforcing cord or of a yarn is used to indicate the ratio calculated between the modulus and the linear density. Tenacity is measured according to the BISFA standard relating to the material subjected to testing according to the definition given below.

For the purposes of the present invention, for measuring the linear density and for determining the tensile properties, in particular the tenacity, reference is made to flat wires, without twists applied in the testing step, according to the tests regulated by the BISFA (Bureau International pour la Standardisation des Fibres Artificielles) standard. In particular:
- for Polyester (PET), reference is made to BISFA - Testing methods for polyester filaments yarns - 2004 edition:
   - Determination of the linear density - Chapter 6 - Procedure A;
   - Determination of the tensile properties - Chapter 7 - Procedure A;
   - Preparation of laboratory samples: Preparation of samples under relaxation - paragraph 7.4.1.1 => preparation of samples on collapsible reel;
   - Preparation of laboratory samples and performance of testing: Manual test - paragraph 7.5.2.1 => c);
   - Start procedure => e) pretension at the start of procedure;
   - Tractions carried out with Zwick - Roell Z010 dynamometer.
- for Nylon (NY), reference is made to BISFA - Testing methods for polyamide yarns - 2004 edition:
   - Determination of the linear density - Chapter 6 - Procedure A;
   - Determination of the tensile properties - Chapter 7 - Procedure A;
   - Preparation of laboratory samples: Preparation of samples under relaxation - paragraph 7.4.1.1 => preparation of samples on collapsible reel;
   - Preparation of laboratory samples and performance of testing: Manual test - paragraph 7.5.2.1 => c);
   - Start procedure => e) pretension at the start of procedure;
   - Tractions carried out with Zwick - Roell Z010 dynamometer.

The term "thermal shrinkage" of a reinforcing cord or of a yarn is used to indicate the reduction in volume of the reinforcing cord or of the yarn measured upon reaching a temperature equal to 177°C, in accordance with the standard ASTM D4974.

The term "radial carcass structure" is used to indicate a carcass structure comprising a plurality of reinforcing cords, each of which is oriented, in a crown portion of the tyre, along a substantially axial direction. Such reinforcing cords can be incorporated in a single carcass ply or in plurality of carcass plies (preferably two) radially juxtaposed over one another.

The term "crossed belt structure" is used to indicate a belt structure comprising a first belt layer including reinforcing cords substantially parallel to one another and inclined with respect to the equatorial plane of the tyre by a predetermined angle and at least one second belt layer arranged in a radially outer position with respect to the first belt layer and including reinforcing cords substantially parallel to one another but oriented, with respect to the equatorial plane of the tyre, with an inclination opposite to the one of the reinforcing cords of the first layer.

The term "zero degrees reinforcing layer" is used to indicate a reinforcing layer comprising at least one reinforcing cord wound on the belt structure according to a substantially circumferential winding direction.

The term "structural component" of a tyre is used to indicate any ply or layer of the tyre containing reinforcing cords, like for example a carcass ply or a belt layer.

The term "thread count" of a structural component of the tyre is used to indicate the number of reinforcing cords per unit length provided in such a component. The thread count can be measured in cords/dm (number of cords per decimeter).

Hereinafter, when the adhesion capability of a textile reinforcing cord, and more generally of elongated elements, to the elastomeric material is discussed, it is deemed to mean the adhesion capability given to the textile reinforcing cord solely by its shape or structure, thus without considering surface coating treatments through adhesive compositions.

In the field of tyre production it is known to use adhesive compositions, for example Resorcinol-Formaldehyde-Latex (RFL) composition, in order to promote the adhesion between the elongated elements and the elastomeric compound and thus ensure the performance properties of the tyre during use.

RFL-based adhesive compositions are applied to the polymeric elongated elements, generally by immersion in an aqueous RFL-based solution, i.e. a rubber latex emulsion in an aqueous solution of resorcinol and formaldehyde (or pre-condensed resin obtained from reaction between resorcin and formaldehyde).

Some materials, such as rayon and aliphatic polyamides, already acquire optimal properties for adhesion with the elastomeric compound through a single immersion in an RFL-based bath (dipping, one-step process) whereas others, such as polyesters or aromatic polyamides, bond with greater difficulty to the elastomeric compound and therefore take advantage of special physical or chemical activating pretreatments. For example, elongated elements made of polyester or aromatic polyamides are subjected to a surface pre-activation through pre-treatment with a first activating bath (pre-dipping, two-step process) or through pre-treatments with ionizing rays, with plasma or with solvents.

Tyres for sports automobiles need a high capability to adhere to the ground, so as to be able to effectively discharge to the ground the high drive torque which they are subjected to and, therefore, to achieve a high thrust and an effective braking force. Such tyres must also be light and provide an adequate response to the stresses which they are subjected to during travel in a straight line and during cornering.

Tyres for sports automobiles typically comprise a radial carcass structure, a crossed belt structure arranged in a radially outer position with respect to the carcass structure, a zero degrees reinforcing layer arranged in a radially outer position with respect to the crossed belt structure and a tread band arranged in a radially outer position with respect to the zero degrees reinforcing layer.

The carcass structure is configured to provide the tyre with the desired characteristics of integrity and structural strength, whereas the belt structure, in addition to contribute to provide for the aforementioned characteristics of integrity and structural strength, is configured to transfer to the carcass structure the lateral and longitudinal stresses which the tyre is subjected to during travel upon contact with the road surface, so as to provide the tyre with the desired performance characteristics (i.e. grip, driving stability, controllability, directionality, road holding). The zero degrees reinforcing layer, on the other hand, is configured to limit the radial deformation of the belt structure.

In order to achieve the aforementioned structural and performance characteristics, one or more reinforcing layers are provided in the carcass structure and in the belt structure, each comprising a plurality of reinforcing cords properly inclined with respect to the circumferential or rolling direction, whereas in the zero degrees reinforcing layer reinforcing cords oriented substantially parallel to the circumferential or rolling direction are provided.

At least some of the aforementioned reinforcing cords are textile reinforcing cords.

Typically, the textile reinforcing cords comprise yarns comprising filaments made of plastic material of fossil origin, in particular PET. This is due to the fact that such a material can be easily found at low cost.

As known, the use of plastic materials of fossil origin has been criticized for a long time now due to the negative impact that they have on the environment. Consequently, many companies, including the Applicant, have evaluated the possibility of using in its products "recycled" plastic materials in place of conventional plastic materials of fossil origin.

In particular, the Applicant has evaluated the possibility of using in its textile reinforcing cords yarns made of recycled plastic material in place of yarns made of plastic material of fossil origin.

However, the Applicant has found that most of the yarns made of recycled plastic material currently available on the market, despite having mechanical characteristics which are much better than those of the yarns made of recycled plastic material which were available up to a decade ago, do not have yet a mechanical behavior identical to that of the corresponding yarns made of plastic material of fossil origin. For example, the Applicant has noticed that, construction of the yarn (i.e. structure, geometry and dimensions of the yarn) being equal, some mechanical characteristics, like for example tenacity and/or breaking load, of the yarn made of recycled plastic material are worse than those of the corresponding yarn made of plastic material of fossil origin.

The Applicant has observed that in order to cover this gap in terms of mechanical characteristics, and thus fall within the technical specifications of the corresponding yarns made of plastic material of fossil origin, it is possible to adopt provisions or to carry out processes which allow to improve the mechanical behavior of the yarns made of recycled plastic material.

For example, in order to cover the gap of tenacity and breaking load it is possible to subject the yarns made of recycled plastic material to a process known as "solid state polymerization" (SSP). Such a process results in an increase of the molecular weight of the yarns through the pre-heating of the prepolymer to temperatures comprised between the glass transition temperature and the melting point.

Another way to cover the gap of tenacity and breaking load consists of applying a certain number of twists per metre on the textile reinforcing cord or on the yarn made of recycled plastic material, such a number of twists being selected as a function of the gap to be cover in order to fall within the technical specifications of the corresponding yarns made of plastic material of fossil origin.

However, the Applicant has found that the application of a large number of twists can compromise the behavior under fatigue of the yarn and, therefore, of the reinforcing cord containing such a yarn.

The Applicant has thus thought about how to make textile reinforcing cords that, while comprising yarns made of recycled plastic material, have mechanical characteristics comparable or similar to those of textile reinforcing cords comprising corresponding filaments made of plastic material of fossil origin, without however it being necessary to carry out SSP processes or to apply twists on the yarns and/or on the reinforcing cords, or possibly providing for the application of a small number of twists in the case in which it is necessary in order to fall within the required technical specifications.

The Applicant has observed that in order to attenuate the degradation of the mechanical characteristics due to the use of yarns made of recycled plastic material, thus obtaining mechanical characteristics comparable with those of textile reinforcing cords comprising yarns made of plastic material of fossil origin, it is advisable to use yarns in which the filaments made of recycled plastic material are at least partially mixed (or commingled) with filaments made of non-recycled plastic material. Indeed, according to the Applicant, such mixing allows a more homogeneous distribution of the recycled plastic material in the yarn and, consequently, a more effective attenuation of the degradation of the mechanical characteristics due to the use of recycled plastic material.

The Applicant has also observed that it is advisable to be able to change the amount and the density of the filaments made of recycled plastic material depending on the cases in order to obtain each time the best compromise between environmental sustainability and mechanical characteristics.

The Applicant has thus thought to make textile reinforcing cords from one or more texturized yarns comprising filaments made of recycled plastic material and filaments made of non-recycled plastic material.

Indeed, the Applicant has observed that the texturization process allows the over-delivery of one yarn with respect to another to be adjusted and therefore makes it possible to change the amount and the density of the filaments made of recycled plastic material in a yarn as desired.

The Applicant has thus found that it is possible to make textile reinforcing cords comprising filaments made of recycled plastic material and having mechanical characteristics (in particular tenacity, breaking load and fatigue resistance) close to those of textile reinforcing cords comprising corresponding filaments made of plastic material of fossil origin, by twisting a texturized yarn comprising filaments made of recycled plastic material at least partially mixed with filaments made of non-recycled plastic material with a texturized yarn of the same type or with a yarn comprising only filaments made of non-recycled plastic material, where the or each texturized yarn is obtained from at least two different ends, one of which comprising the filaments made of non-recycled plastic material and another of which comprising the filaments made of non-recycled plastic material.

Therefore, the present invention relates, in a first aspect thereof, to a textile reinforcing cord according to claim 1.

In a second aspect thereof, the invention relates to a tyre for vehicle wheels according to claim 11.

The Applicant has found that thanks to the use of a texturized yarn, possibly twisted with another texturized yarn of analogous type, it is possible to achieve that the textile reinforcing cord has a mechanical behavior substantially identical to that of textile reinforcing cords of analogous construction comprising filaments made of the corresponding material of fossil origin. This is obtained without the need to apply twists or with the application of a limited number of twists, where this is absolutely necessary in order to fall within the required technical specifications. In this way, the behavior under fatigue of the textile reinforcing cord is preserved.

The Applicant believes that the textile reinforcing cords described above can replace the corresponding textile reinforcing cords having the same plastic material, but of fossil origin, currently used in tyres, with consequent benefits in terms of environmental sustainability.

In at least one of the aforementioned aspects, the present invention can have at least one of the preferred characteristics described hereinafter.

Preferably, the recycled plastic material is PET, preferably obtained from bottles.

Preferably, the non-recycled plastic material is PET at least partially of fossil origin.

The choice of preferring yarns made of recycled PET and of PET of fossil origin is due basically to the fact that they can be easily found on the market and that they have a low cost.

Alternatively, the non-recycled plastic material is PET that is at least partially bio-based or nylon that is at least partially bio-based.

PET (polyethylene terephthalate) is a polymer obtained through the polycondensation of purified terephthalic acid (PTA) with ethylene glycol (EG). EG can be obtained from bio-ethanol (bio-mass). The process makes it possible to have 30% material of biological origin (PET 30% of biological origin). Moreover, by replacing purified terephthalic acid (PTA) with FDCA (2,5-furandicarboxylic acid), which can be obtained from carbohydrates of biological origin (for example fructose), it is possible to reach a PET 100% of biological origin.

By cleavage of the ricinoleic acid that is esterified in ricin oil, it is possible to obtain sebacic acid or 1,10-decandioic acid (formula (HOOC(CH₂)₈COOH), which when reacted with tetramethylene diamine provides nylon 4.10 70% of biological origin, whereas when reacted with hexamethyldiamine provides nylon 6.10 90% of biological origin.

Nylon 5.6 45% of biological origin, on the other hand, is produced by pentandiamine and adipic acid or hexanedioic acid (formula (CH₂)₄(COOH)₂), which is found in nature in beetroot and in sugar cane.

Preferably, the first filaments are in a proportion greater than or equal to 50% by weight with respect to the total weight of the texturized yarn. The higher the percentage by weight of the first filaments with respect to the second filaments in the texturized yarn, the greater the amount of recycled plastic material used in the textile reinforcing cord in place of the corresponding non-recycled plastic material and, consequently, the greater the environmental sustainability thereof. However, it is preferred to keep a certain percentage of non-recycled plastic material in the texturized yarn so as to ensure that the reinforcing cord has a mechanical behavior very similar to that of an analogous reinforcing cord comprising filaments made of plastic material of fossil origin.

Preferably, the texturized yarn has a linear density greater than, or equal to, 300 dtex, more preferably greater than, or equal to, 400 dtex, even more preferably greater than, or equal to, 500 dtex.

Preferably, the texturized yarn has a linear density lower than, or equal to, 3500 dtex, more preferably lower than, or equal to, 2500 dtex, even more preferably lower than, or equal to 2300 dtex.

In preferred embodiments, the texturized yarn has a linear density comprised between 300 dtex and 3500 dtex, more preferably between 400 dtex and 2300 dtex, even more preferably between 500 dtex and 2500 dtex. For example, such a linear density is equal to 1100 dtex or 1670 dtex or 2203 dtex.

The texturized yarn is obtained from two yarns, one of which comprises said plurality of first filaments and the other comprises said plurality of second filaments.

Preferably, the yarn comprising said plurality of first filaments has a linear density greater than, or equal to, 150 dtex, more preferably greater than, or equal to, 400 dtex, even more preferably greater than, or equal to, 500 dtex.

Preferably, the yarn comprising said plurality of first filaments has a linear density lower than, or equal to, 3350 dtex, more preferably lower than, or equal to, 2500 dtex, even more preferably lower than, or equal to 2300 dtex.

In preferred embodiments, the yarn comprising said plurality of first filaments has a linear density comprised between 150 dtex and 3350 dtex, preferably between 400 dtex and 2500 dtex, more preferably between 500 dtex and 2300 dtex, even more preferably between 550 dtex and 1800 dtex. For example, such a linear density is equal to 550 dtex or 1100 dtex or 1670 dtex.

Preferably, the yarn comprising said plurality of second filaments has a linear density greater than, or equal to, 150 dtex, more preferably greater than, or equal to, 400 dtex, even more preferably greater than, or equal to, 500 dtex.

Preferably, the yarn comprising said plurality of second filaments has a linear density lower than, or equal to, 3350 dtex, more preferably lower than, or equal to, 2500 dtex, even more preferably lower than, or equal to 2300 dtex.

In preferred embodiments, the yarn comprising said plurality of second filaments has a linear density comprised between 150 dtex and 3350 dtex, preferably between 400 dtex and 2500 dtex, more preferably between 500 dtex and 2300 dtex, even more preferably between 550 dtex and 1800 dtex. For example, such a linear density is equal to 550 dtex or 1100 dtex.

The higher the linear density of the first filaments with respect to the second filaments in the texturized yarn, the greater the amount of recycled plastic material with respect to the non-recycled plastic material in the textile reinforcing cord and, consequently, the greater the environmental sustainability thereof.

Preferably, the first filaments have a tenacity greater than, or equal to, 5 cN/dtex, in accordance with chapter 7 of the BISFA standard relating to PET.

The Applicant has indeed observed that filaments made of recycled plastic material having tenacity comparable with that of the corresponding filaments made of plastic material of fossil origin can be found on the market, and it is therefore possible to replace the second with the first, possibly providing for the application of a small number of twists so as to fall within the technical specifications of the second.

Preferably, the texturized yarn has a thermal shrinkage lower than, or equal to, 3%, measured in accordance with the standard ASTM D4974.

The Applicant has found that due to the fact that the textile reinforcing cords of the invention contain recycled plastic material, they have a thermal shrinkage lower than that of the textile reinforcing cords containing an analogous material of fossil origin, to the benefit of the dimensional and direction stability of the tyre during use and of the durability thereof at high speeds, i.e. when the temperatures increase and the centrifugal forces reach high values. This is particularly advantageous also both during manufacturing of the tyre, in particular during the vulcanization of the green tyre, and during the use of the tyre, particularly with reference to the textile reinforcing cords of the carcass structure and of the zero degrees reinforcing layer of the tyre.

Preferably, said at least some textile reinforcing cords have an elongation at break greater than, or equal to, 12%, measured in accordance with the BISFA standard.

The Applicant has found that, due to the lower thermal shrinkage, the textile reinforcing cords of the invention have, the load being equal, an elongation at break greater than that of textile reinforcing cords that contain only material of fossil origin.

In those cases in which it is necessary to apply twists to the textile reinforcing cord to fall within the required technical specifications, preferably the number of twists per metre (tpm) is lower than 500.

In such cases, the number of twists per metre applied to the textile reinforcing cord during the twisting step is preferably greater than 100.

In preferred embodiments, the number of twists per metre applied to the textile reinforcing cord during the twisting step is comprised between 100 and 500, for example it is equal to 350.

Preferably, whenever twists have to be applied to the textile reinforcing cord during the twisting step, twists are also applied to the texturized yarn before the twisting step. In this case, the twists applied to the textile reinforcing cord are in the opposite direction to those applied to the texturized yarn.

Preferably, at least another yarn of said at least two yarns is identical to said texturized yarn. In this case, the benefits produced by the textile reinforcing cord in terms of environmental sustainability increase.

More preferably, all the yarns of said at least two yarns are texturized yarns of the type described above.

Alternatively, at least another yarn of said at least two yarns comprises only filaments made of a non-recycled plastic material.

Preferably, the texturized yarn is twisted to the other yarn by applying the aforementioned number of twists per metre.

Preferably, said at least some textile reinforcing cords comprise a surface coating capable of improving the adhesion of the textile reinforcing cords to the surrounding elastomeric material while the tyre is being manufactured and during use thereof, like for example a coating containing a mixture of resorcinol-formaldehyde resin and rubber latex (RFL).

Preferably, the tyre comprises a carcass structure.

Preferably, the carcass structure extends between opposite bead structures.

Preferably, the tyre comprises a tread band arranged in a radially outer position with respect to the carcass structure.

Preferably, the tyre comprises a crossed belt structure radially interposed between the carcass structure and the tread band.

Preferably, the tyre comprises a zero degrees reinforcing layer radially interposed between the crossed belt structure and the tread band.

Preferably, said at least one structural component is a structural component of the carcass structure, more preferably a carcass ply, and/or the zero degrees reinforcing layer.

The aforementioned structural component can also be a stiffening layer associated with the carcass ply at or close to a respective bead structure.

Said stiffening layer can be arranged between a respective turned end edge of the carcass ply and the respective bead structure.

In particular, said stiffening layer can at least partially surround said bead structure. Such a stiffening layer is also indicated with the term "flipper".

Alternatively or in addition, said stiffening layer can be associated with the respective turned end edge of the carcass ply in an axially outer position with respect to the respective annular anchoring structure.

In particular, said stiffening layer can extend from said annular anchoring structure towards the tread band. Such a stiffening layer is also indicated with the term "chafer".

The chafer can be arranged in an axially outer position or in an axially inner position with respect to the end edge of the carcass ply. In the case in which the carcass structure comprises a plurality of carcass plies, for example two, the chafer can be arranged between the respective end edges of the various carcass plies.

### DESCRIPTION OF EMBODIMENTS OF THE INVENTION

Further characteristics and advantages of the tyre of the present invention will become clearer from the following detailed description of preferred embodiments thereof, made with reference to the attached drawings. In such drawings:
- figure 1 is a schematic partial half-cross section view of a portion of a tyre according to an embodiment of the present invention;
- figure 2 is a schematic side view of a segment of a first preferred embodiment of a textile reinforcing cord used in the tyre of figure 1;
- figure 3 schematically shows a cross section of the textile reinforcing cord of figure 2, taken at the plane S indicated in figure 2;
- figure 4 is a schematic section view of a device used to make a texturized yarn used to make the textile reinforcing cord of figure 2, during a step of the process carried out in such a device;
- figure 4a schematically shows a cross section of two ends used to make the texturized yarn of figure 3, taken at the plane S1 indicated in figure 4;
- figure 4b schematically shows a cross section of the texturized yarn of figure 3, taken at the plane S2 indicated in figure 4.

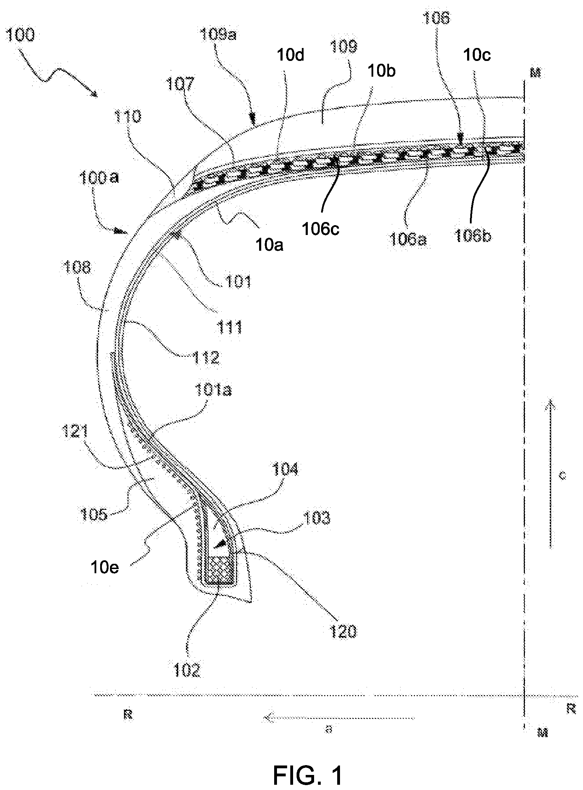

For the sake of simplicity, figure 1 shows only a part of an embodiment of a tyre 100 in accordance with the present invention, the remaining part, which is not shown, being substantially identical and being arranged symmetrically with respect to the equatorial plane M-M of the tyre.

The tyre 100 illustrated in figure 1 is, in particular, an embodiment of a tyre for four-wheeled vehicles.

Preferably, the tyre 100 is an HP or UHP tyre for sports and/or high or ultra-high performance vehicles.

In particular, the tyre 100 carries one of the following speed codes: "T", "U", "H", "V", "Z","W", "Y", according to the E.T.R.T.O. standard.

In Figure 1 "a" indicates an axial direction, "c" indicates a radial direction, "M-M" indicates the equatorial plane of the tyre 100 and "R-R" indicates the rotation axis of the tyre 100.

The tyre 100 comprises at least one support structure 100a and, in a radially outer position with respect to the support structure 100a, a tread band 109 made of elastomeric material.

The support structure 100a comprises a carcass structure 101, in turn comprising at least one carcass ply 111.

Hereinafter, for the sake of simplicity of disclosure, reference will be made to an embodiment of the tyre 100 comprising a single carcass ply 111. However, it is understood that what is described has analogous application in tyres comprising more than one carcass ply.

The carcass ply 111 has axially opposite end edges engaged with respective annular anchoring structures 102, called bead cores, possibly associated with an elastomeric filler 104. The area of the tyre 100 comprising the bead core 102 and the possible elastomeric filler 104 forms an annular reinforcing structure 103 called "bead structure" and configured to allow the anchoring of the tyre 100 on a corresponding mounting rim, not shown.

The carcass ply 111 comprises a plurality of reinforcing cords 10a coated with elastomeric material or incorporated in a matrix of crosslinked elastomeric material.

The carcass structure 101 is of the radial type, i.e. the reinforcing cords 10a are provided on planes comprising the rotation axis R-R of the tyre 100 and substantially perpendicular to the equatorial plane M-M of the tyre 100.

Each annular reinforcing structure 103 is associated with the carcass structure 101 by folding back (or turning) the opposite end edges of the at least one carcass ply 111 about the bead core 102 and the possible elastomeric filler 104, so as to form the so-called turns 101a of the carcass structure 101.

In an embodiment, the coupling between carcass structure 101 and annular reinforcing structure 103 can be made through a second carcass ply (not shown in Figure 1) applied in a radially outer position with respect to the carcass ply 111.

An anti-abrasion strip 105 is arranged at each annular reinforcing structure 103 so as to wrap around the annular reinforcing structure 103 along the axially inner, axially outer and radially inner areas of the annular reinforcing structure 103, thus being interposed between the latter and the rim of the wheel when the tyre 100 is mounted on the rim. However, such an anti-abrasion strip 105 may not be provided.

The support structure 100a comprises, in a radially outer position with respect to the carcass structure 101, a crossed belt structure 106 comprising at least two belt layers 106a, 106b arranged radially juxtaposed with respect to one another.

The belt layers 106a, 106b comprise a plurality of reinforcing cords 10b, 10c, respectively. Such reinforcing cords 10b, 10c have an orientation inclined with respect to the circumferential direction of the tyre 100, or to the equatorial plane M-M of the tyre 100, by an angle comprised between 15° e 45°, preferably between 20° and 40°. For example, such an angle is equal to 30°.

The support structure 100a can also comprise a further belt layer (not shown) arranged between the carcass structure 101 and the radially innermost belt layer of the aforementioned belt layers 106a, 106b and comprising a plurality of reinforcing cords having an orientation inclined with respect to the circumferential direction of the tyre 100, or to the equatorial plane M-M of the tyre 100, by an angle equal to 90°.

The support structure 100a can also comprise a further belt layer (not shown) arranged in a radially outer position with respect to the radially outermost belt layer of the aforementioned belt layers 106a, 106b and comprising a plurality of reinforcing cords having an orientation inclined with respect to the circumferential direction of the tyre 100, or to the equatorial plane M-M of the tyre 100, by an angle comprised between 20° and 70°.

The reinforcing cords 10b, 10c of a belt layer 106a, 106b are parallel to one another and have a crossed orientation with respect to the reinforcing cords 10c, 10b of the other belt layer 106b, 106a.

In ultra-high performance tyres, the belt structure 106 can be a turned crossed belt structure. Such a belt structure is made by arranging at least one belt layer on a support element and by turning the opposite side end edges of said at least one belt layer. Preferably, at first a first belt layer is deposited on the support element, then the support element is radially expanded, then a second belt layer is deposited on the first belt layer and finally the opposite axial end edges of the first belt layer are turned over the second belt layer to at least partially cover the second belt layer, which is the radially outermost one. In some cases, a third belt layer can be arranged on the second belt layer. Advantageously, the turning of the axially opposite end edges of a belt layer over another belt layer arranged on a radially outer position of the first one provides the tyre with a greater reactivity and responsiveness when cornering.

The support structure 100a comprises, in a radially outer position with respect to the crossed belt structure 106, at least one zero degrees reinforcing layer 106c, commonly known as "zero degrees belt". It comprises reinforcing cords 10d oriented in a substantially circumferential direction. Such reinforcing cords 10d thus form an angle of a few degrees (typically lower than 10°, for example comprised between 0° and 6°) with respect to the equatorial plane M-M of the tyre 100.

The tread band 109 made of elastomeric material, as well as other semi-finished products constituting the tyre 100, is applied in a radially outer position with respect to the zero degrees reinforcing layer 106c.

Respective sidewalls 108 made of elastomeric material are also applied on the side surfaces of the carcass structure 101, in an axially outer position with respect to the carcass structure 101. Each sidewall 108 extends from one of the side edges of the tread band 109 up to the respective annular reinforcing structure 103.

The anti-abrasion strip 105, when provided, extends at least up to the respective sidewall 108.

In some specific embodiments, such as the one shown and described herein, the stiffness of the sidewall 108 can be improved by providing a stiffening layer 120, generally known as "flipper" or additional strip-like insert, which has the function of increasing the stiffness and integrity of the annular reinforcing structure 103 and of the sidewall 108.

The flipper 120 is wound around a respective bead core 102 and the elastomeric filler 104 so as to at least partially surround the annular reinforcing structure 103. In particular, the flipper 120 wraps around the annular reinforcing structure 103 along the axially inner, axially outer and radially inner areas of the annular reinforcing structure 103.

The flipper 120 is arranged between the turned end edge of the carcass ply 111 and the respective annular reinforcing structure 103. Usually, the flipper 120 is in contact with the carcass ply 111 and the annular reinforcing structure 103.

In some specific embodiments, like the one shown and described herein, the bead structure 103 can also comprise a further stiffening layer 121 that is generally known by as "chafer", or protective strip, which has the function of increasing the stiffness and integrity of the annular reinforcing structure 103.

The chafer 121 is associated with a respective turned end edge of the carcass ply 111 in an axially outer position with respect to the respective annular reinforcing structure 103 and extends radially towards the sidewall 108 and the tread band 109.

The flipper 120 and the chafer 121 comprise reinforcing cords 10e (in the attached figures those of the flipper 120 are not visible).

The tread band 109 has, in a radially outer position thereof, a rolling surface 109a configured to come into contact with the ground. Circumferential grooves (not shown in figure 1) are formed on the rolling surface 109a, said grooves being connected by transversal notches (not shown in figure 1) so as to define on the rolling surface 109a a plurality of blocks of various shapes and sizes (not shown in figure 1).

An under-layer 107 is arranged between the crossed belt structure 106 and the tread band 109.

In some specific embodiments, like the one shown and described herein, a strip 110 consisting of elastomeric material, commonly known as "mini-sidewall", can be provided in the connection area between the sidewalls 108 and the tread band 109. The mini-sidewall 110 is generally obtained through co-extrusion with the tread band 109 and allow an improvement of the mechanical interaction between the tread band 109 and the sidewalls 108.

Preferably, an end portion of the sidewall 108 directly covers the side edge of the tread band 109.

In the case of tubeless tyres, a layer of rubber 112, generally known as "liner", can also be provided in a radially inner position with respect to the carcass ply 111 to provide the necessary impermeability to the inflation air of the tyre 100.

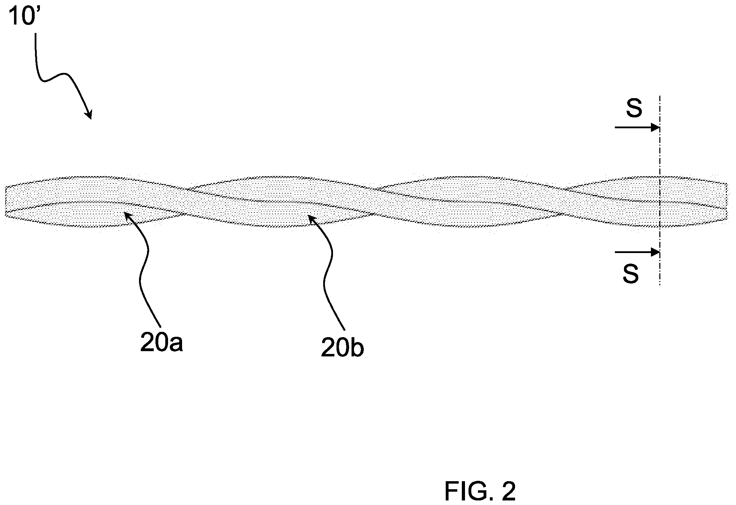

At least some of the reinforcing cords 10a (preferably all of the reinforcing cords 10a of the carcass ply 111) and/or of the reinforcing cords 10d (preferably all of the reinforcing cords 10d of the zero degrees belt layer 106c) and/or of the reinforcing cords 10e of the flipper 120 and/or of the chafer 121 are textile reinforcing cords 10' of the type shown in figure 2 and described below.

With reference to figure 2, the textile reinforcing cord 10' comprises two yarns 20a, 20b twisted to one another.

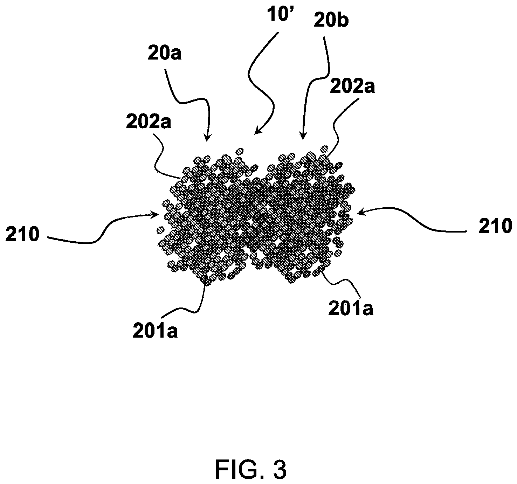

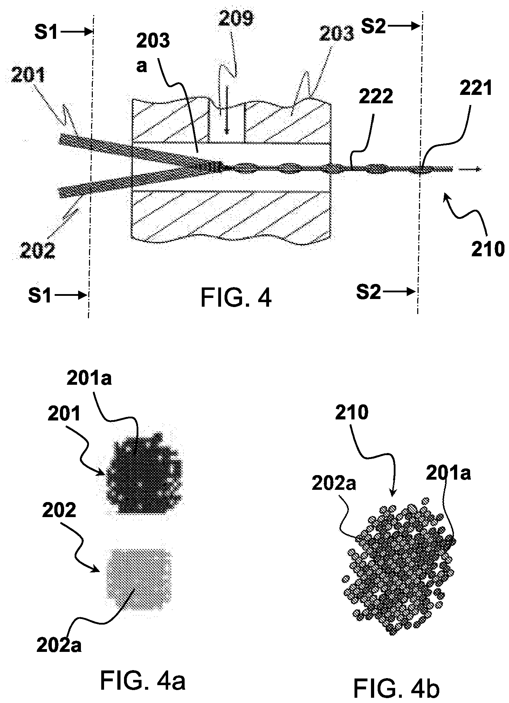

At least one of the two yarns 20a, 20b is a texturized yarn, indicated with 210 in figures 3, 4 and 4b and described below.

Preferably, the two yarns 20a, 20b are identical, i.e. they are both texturized yarns 210, as shown in figure 3.

As shown in figures 4, 4a and 4b, the texturized yarn 210 (or each texturized yarn 210) is obtained from two different yarns 201 and 202.

With reference to figure 4, the two yarns 201 and 202 are fed and brought together inside a main duct 203a of an airjet device 203. Pressurized air is also fed inside the latter through a secondary duct 209. The air, hitting the two yarns 201 and 202, creates a turbulence suitable for separating the individual filaments 201a of the yarn 201 and the individual filaments 202a of the yarn 202 and mixing them with each other, thus forming the texturized yarn 210. The latter comprises, along the longitudinal extension thereof, a plurality of curls (or nodes) 221 spaced apart from each other by substantially straight portions 222. The texturized yarn 210 exiting from the airjet device 203 is subsequently wound in a reel.

Figure 4a shows a cross section of the two yarns 201 and 202, whereas figure 4b shows a cross section of the texturized yarn 210. It can be noted how in the latter the filaments 201a of the yarn 201 are mixed with the filaments 202a of the yarn 202.

Preferably, the air is fed into the secondary duct 209 at a pressure comprised between 2 bar and 4 bar.

The feeding speeds of the yarns 201 and 202 to the airjet device 203 can be the same or different and higher or lower than the exit speed of the texturized yarn 210 from the airjet device 203. Preferably, the feeding speeds of the yarn 201 and 202 are different and are both greater than the exit speed of the texturized yarn 210.

Preferably, the feeding speed of one of the two yarns 201, 202 is greater by between about 1% and about 15%, more preferably greater by between about 1.5% and about 7%, than the exit speed of the texturized yarn 210.

Preferably, the feeding speed of the other of the two yarns 202, 201 is greater by between about 1% and about 20%, more preferably greater by between about 5% and about 10%, than the exit speed of the texturized yarn 210.

Preferably, the exit speed of the texturized yarn 210 from the airjet device 203 is comprised between 250 m/min and 450 m/min.

Preferably, an over-delivery of both of the yarns 201 and 202 is provided, i.e. both yarns 201 and 202 are fed to the airjet device with a speed higher than the exit speed of the texturized yarn 210.

More preferably, the over-delivery of one of the two yarns is greater than that of the other yarn.

Due to the fact that one of the two yarns (hereinafter indicated as "first yarn") has a feeding speed lower than the other as well as an over-delivery lower than that of the other yarn (hereinafter indicated as "second yarn"), the first yarn forms mainly the substantially straight portions 222 whereas the second yarn forms mainly the curls 221.

The choice of the pressure value of the air, of the feeding speed of the yarns 201 and 202 and of the exit speed of the texturized yarn 210 (and therefore of the over-delivery of each of the yarns 201 and 202) is a function of the level of mixing that it is wished to obtain, and therefore of the number of curls 221 provided in the texturized yarn 310 for the same length. This makes it possible to obtain texturized yarns 210, and therefore textile reinforcing cords 10', having different elongations for the same load, thus making possible to select each time the one which is most suitable for the specific final application (for example depending on the structural component in which it is intended to be used).

The yarn 201 comprises a plurality of filaments 201a made of recycled plastic material, preferably PET obtained entirely from bottles (or, alternatively, partially from industrial technical waste). Such filaments 201a have a tenacity greater than, or equal to, 5 cN/dtex.

The yarn 202 comprises a plurality of filaments 202a made of plastic material of fossil origin, preferably PET.

Preferably, at least 50% by weight of the filaments of the texturized yarn 210 are filaments 201a of the yarn 201 and the remaining part are filaments 202a of the yarn 202.

For example, it is possible to provide a percentage of 50% recycled PET in a texturized yarn 210 made of PET and having a linear density equal to 1100 dtex, or a percentage of 65% of recycled PET in a texturized yarn 210 made of PET and having a linear density equal to 1650 dtex, or a percentage of 75% recycled PET in a texturized yarn 210 made of PET and having a linear density equal to 2200 dtex.

It is also possible to provide for the filaments 202a of the yarn 202 to be made of PET of biological origin or of nylon of biological origin.

For example:
- it is possible to make a texturized yarn 85% bio-sustainable with linear density equal to 1100 dtex from a yarn 201 made of recycled PET 100% bio-sustainable having linear density equal to 550 dtex and a yarn 202 made of nylon 4.10 70% bio-sustainable having linear density equal to 550 dtex;
- it is possible to make a bio-sustainable texturized yarn 89.1% with linear density equal to 1650 dtex from a yarn 201 made of recycled PET 100% bio-sustainable having linear density equal to 1100 dtex and a yarn 202 made of nylon 4.10 70% bio-sustainable having linear density equal to 550 dtex;

- it is possible to make a bio-sustainable texturized yarn 92.5% with linear density equal to 2200 dtex from a yarn 201 made of recycled PET 100% bio-sustainable having linear density equal to 1670 dtex and a yarn 202 made of nylon 4.10 70% bio-sustainable having linear density equal to 550 dtex;
- it is possible to make a bio-sustainable texturized yarn 95% with linear density equal to 1100 dtex from a yarn 201 made of recycled PET 100% bio-sustainable having linear density equal to 550 dtex and a yarn 202 made of nylon 6.10 90% bio-sustainable having linear density equal to 550 dtex;
- it is possible to make a bio-sustainable texturized yarn 95.7% with linear density equal to 1650 dtex from a yarn 201 made of recycled PET 100% bio-sustainable having linear density equal to 1100 dtex and a yarn 202 made of nylon 6.10 90% bio-sustainable having linear density equal to 550 dtex;
- it is possible to make a bio-sustainable texturized yarn 97.5% with linear density equal to 2200 dtex from a yarn 201 made of recycled PET 100% bio-sustainable having linear density equal to 1670 dtex and a yarn 202 made of nylon 6.10 90% bio-sustainable having linear density equal to 550 dtex;
- it is possible to make a bio-sustainable texturized yarn 72.5% with linear density equal to 1100 dtex from a yarn 201 made of recycled PET 100% bio-sustainable having linear density equal to 550 dtex and a yarn 202 made of nylon 5.6 45% bio-sustainable having linear density equal to 550 dtex;
- it is possible to make a bio-sustainable texturized yarn 80.85% with linear density equal to 1650 dtex from a yarn 201 made of recycled PET 100% bio-sustainable having linear density equal to 1100 dtex and a yarn 202 made of nylon 5.6 45% bio-sustainable having linear density equal to 550 dtex;
- it is possible to make a bio-sustainable texturized yarn 86.25% with linear density equal to 2200 dtex from a yarn 201 made of recycled PET 100% bio-sustainable having linear density equal to 1670 dtex and a yarn 202 made of nylon 5.6 45% bio-sustainable having linear density equal to 550 dtex.

Preferably, the yarns 201 and 202 have a linear density comprised between 150 dtex and 3350 dtex, more preferably between 400 dtex and 2500 dtex, even more preferably between 500 dtex and 2300 dtex. The linear density of the yarn 201 can be equal to, or different from, that of the yarn 202, being it possible to foresee all of the combinations within the aforementioned value ranges. For example, the linear density of both the yarn 201 and the yarn 202 can be equal to 550 dtex to make a textile reinforcing cord 10' having a linear density equal to 1100 dtex, or equal to 1100 dtex to make a textile reinforcing cord 10' having a linear density equal to 2200 dtex. Or, the linear density of the yarn 201 can be equal to 1100 dtex and that of the yarn 202 can be equal to 550 dtex to make a textile reinforcing cord 10' having a linear density equal to 1650 dtex. Or, the linear density of the yarn 201 can be equal to 1650 dtex and the one of the yarn 2002 can be equal to 550 dtex to make a textile reinforcing cord 10' having a linear density equal to 2200 dtex.

Preferably, the texturized yarn 210 has a linear density comprised between 300 dtex and 3500 dtex, more preferably between 400 dtex and 2300 dtex, even more preferably between 500 dtex and 2500 dtex.

Preferably, the texturized yarn 210 has a thermal shrinkage lower than, or equal to, 3%, measured according to standard ASTM D4974.

Preferably, the textile reinforcing cord 10' has an elongation at break greater than, or equal to, 12%.

Preferably, the textile reinforcing cord 10' can have a number of twists per metre (tpm) that is lower than, or equal to, 350.

The textile reinforcing cord 10' can be incorporated in a crosslinkable elastomeric composition according to well-known techniques. Usually, said elastomeric composition comprises elastomeric polymers, as well as other additives like, for example, fillers (for example carbon black, silica), vulcanizing agents (for example sulfur), activators, accelerants, plasticizers used in the tyre industry. Examples of elastomeric polymers that can be used are: natural rubber (NR), epoxy natural rubber (ENR); homopolymers and copolymers of butadiene, isoprene or 2-chlorobutadiene like, for example, polybutadiene (BR), polyisoprene (IR), styrene-butadiene (SBR), nitrile-butadiene (NBR), polychloroprene (CR); butyl rubbers (IIR), halogenated butyl rubbers (XIIR); ethylene/propylene copolymers (EPM); unconjugated ethylene/propylene/diene terpolymers (like, for example, norbornene, cyclooctadiene or dicyclopentadiene (EPDM); or mixtures thereof. Those skilled in the art are able to determine which elastomeric polymers, as well as which additives, to be uses, as a function of the characteristics of the end product to be obtained.

The textile reinforcing cord 10' is suitably made adhesive on its surface so as to offer an adequate adhesion to the surrounding elastomeric material.

Preferably, the adhesivity is obtained through a dipping treatment, possibly also providing a pre-dipping, and subsequently proceeding with the drying of the textile reinforcing cord 10'. The latex used in the RFL composition can be selected, for example, among: vinylpiridine/styrene-butadiene (VP/SBR), styrene-butadiene (SBR), natural rubber latex (NR), acrylonitrile-butadiene carboxylate and hydrogenate (X-HNBR), acrylonitrile hydrogenate (HNBR), acrylonitrile (NBR), ethylene-propylene-diene monomer (EPDM), chlorosulfonated polyethylene (CSM) or a mixture thereof.

The Applicant has carried out some comparative tests to evaluate the mechanical behavior of reinforcing cords obtained from texturized yarns comprising filaments made of recycled plastic material mixed with filaments made of plastic material of fossil origin. Hereinafter, such reinforcing cords are also indicated as "reinforcing cords of the invention".

In a first series of tests, the Applicant made a sample of fabric with thread count equal to 105 cords/dm comprising reinforcing cords of the invention (hereinafter indicated as "sample 1") and a sample of fabric of equal thread count comprising textile reinforcing cords entirely made of plastic material of fossil origin and having a linear density substantially identical to that of the cords of sample 1 (hereinafter indicated as "reference sample").

The reinforcing cords of both samples comprise two yarns made of PET twisted together by applying 300 twists per metre.

Each reinforcing cord of the reference sample comprised two commercial yarns made of PET of fossil origin having linear density equal to 1670 dtex.

Each reinforcing cord of sample 1 comprised two texturized yarns having a linear density equal to 1650 dtex.

Each of the two texturized yarns was formed from a yarn made of 100% recycled PET from bottles and having a linear density equal to 1100 dtex, commercialized by Sinterama Corporate with the trade name "NEW LIFE", and a yarn made of PET of fossil origin having a linear density equal to 550 dtex. Such a texturized yarn is indicated hereinafter with "texturized yarn PET 1650". This is a 66% bio-sustainable yarn.

The yarns made of recycled PET were not subjected to any SPP process.

The yarns made of PET of fossil origin had been pre-activated, so that the reinforcing cords of the reference sample were subjected to pre-dipping and dipping treatments.

Table 1 below shows the main mechanical characteristics of the yarn made of recycled PET (indicated with "recycled PET 1100"), of a yarn made of PET of fossil origin having the same linear density (indicated with "fossil PET 1100") and of the yarn made of PET of fossil origin having a linear density equal to 550 dtex (indicated with "fossil PET 550").

**Table 1**

| | Breaking load | Elongation at break | Thermal shrinkage | Tenacity |
|---|---|---|---|---|
| | (N) | (%) | (%) | (cN/dtex) |
| recycled PET 1100 | 58.2 | 16.17 | 0.14 | 5.57 |
| fossil PET 1100 | 77.3 | 11.34 | 3.02 | 6.95 |
| fossil PET 550 | 39.9 | 11.24 | 3.62 | 7.08 |

Table 2 below shows some mechanical characteristics of the texturized yarn PET 1650 and of a yarn made of PET of fossil origin (hereinafter indicated with "fossil yarn PET 1670") having a linear density substantially equal to that of the texturized yarn PET 1650.

**Table 2**

| | Breaking load (N) | Elongation at break (%) | Thermal shrinkage (%) |
|---|---|---|---|
| Texturized yarn PET 1650 | 88.8 | 13.64 | 1.98 |
| Fossil yarn PET 1670 | 122.83 | 11.60 | 3.28 |

Table 2 demonstrates that in applications in which the behavior of the reinforcing cords in terms of elongation at break and thermal shrinkage is more critical than that in terms of breaking load and tenacity (like for example in the carcass ply and in the zero degrees reinforcing layer), the reinforcing cords of the invention can replace the currently used textile reinforcing cords containing PET of fossil origin, to the benefit of the environmental sustainability.

Further confirmation of this can be seen in Table 3 below. In Table 3 the mechanical characteristics of three textile reinforcing cords of the type of those used in sample 1 (indicated with "recycled cord") and that differed from one another only for the number of twists applied to the texturized yarns before being twisted together and to the reinforcing cords obtained by twisting such yarns (such numbers of twists are respectively indicated with Z and S in Table 3 below) are compared with those of the reinforcing cord used in the reference sample (indicated with "fossil cord").

**Table 3**

| | Z/S | Breaking load (N) | Elongation at break (%) | Thermal shrinkage (%) |
|---|---|---|---|---|
| Recycled cord 1 | 262/262 | 178 | 17.7 | 5.13 |
| Recycled cord 2 | 295/289 | 178 | 18.3 | 5.29 |
| Recycled cord 3 | 325/319 | 173 | 18.2 | 5.59 |
| Fossil cord | 335/339 | 216 | 17.4 | 5.77 |

Table 3 shows that by suitably selecting the number of twists to be applied to the texturized yarns and to the reinforcing cords it is possible to obtain reinforcing cords of the invention having a behavior in terms of elongation at break and thermal shrinkage substantially identical to those of conventional textile reinforcing cords wherein only PET of fossil origin is used, further obtaining the environmental sustainability.

The cords indicated in Table 3 are all cords that were not subjected to an adhesivity treatment.

However, analogous conclusions are reached when reference is made to cords that are subjected to an adhesivity treatment, as shown in Table 4 below. Indeed, Table 4 illustrates a better behavior of the reinforcing cords of the invention in terms of thermal shrinkage.

**Table 4**

| | Z/S | Breaking load (N) | Elongation at break (%) | Thermal shrinkage (%) |
|---|---|---|---|---|
| Recycled cord 1 | 262/262 | 168 | 14.5 | 1.11 |
| Recycled cord 2 | 295/289 | 165 | 14.8 | 1.09 |
| Recycled cord 3 | 325/319 | 160 | 14.7 | 1.02 |
| Fossil cord | 335/339 | 213 | 14.4 | 2.07 |

The Applicant has also observed that where it is absolutely necessary to cancel out the gap in terms of breaking load between the reinforcing cords of the invention and the corresponding reinforcing cords with plastic material of fossil origin (for example in order to be able to use the reinforcing cords of the invention also in structural components of the tyre in which the breaking load is a particularly critical parameter), yarns made of recycled plastic material that are suitable for this purpose are available on the market.

The Applicant has indeed found that the source and the quality of the recycled material play a relevant role. For example, in order to recover the aforementioned gap it is also possible to use recycled plastic material from industrial technical waste. Such a material indeed has mechanical characteristics identical to those of plastic material of fossil origin. In this case, it is possible to provide a percentage of recycled plastic material from industrial technical waste which is variable, for example between 10% and 20%.

Yet another way of recovering the aforementioned gap is to increase the thread count of the textile reinforcing cords in the layer of structural component of interest.

The Applicant has also found that the behavior under fatigue of fabrics comprising reinforcing cords of the invention is substantially identical to that of fabrics comprising reinforcing cords made of PET of normal production.

For this purpose, the Applicant subjected sample 1 and the reference sample to fatigue cycles and measured the breaking load after 4, 8, 24 and 48 hours, finding that the degradation trend of the breaking load of sample 1 is absolutely comparable with that of the reference sample. This confirms the possibility of using the reinforcing cords of the invention in place of conventional reinforcing cords with plastic material of fossil origin.

The present invention has been described with reference to some preferred embodiments. Different changes can be made to the embodiments described above, whilst still remaining within the scope of protection of the invention as defined by the following claims.

## Claims

1. Textile reinforcing cord (10') comprising at least two yarns (20a, 20b) twisted together, wherein at least one of said at least two yarns (20a, 20b) is a texturized yarn (210) comprising a plurality of first filaments (201a) made of a recycled plastic material mixed with a plurality of second filaments (202a) made of a non-recycled plastic material.

2. Textile reinforcing cord (10') according to claim 1, wherein the recycled plastic material is PET.

3. Textile reinforcing cord (10') according to any one of the previous claims, wherein the non-recycled plastic material is PET at least partially of fossil origin or bio-based or nylon at least partially bio-based.

4. Textile reinforcing cord (10') according to any one of the previous claims, wherein the first filaments (201a) are in a proportion greater than or equal to 50% by weight with respect to the total weight of the texturized yarn (210).

5. Textile reinforcing cord (10') according to any one of the previous claims, wherein the texturized yarn (210) has a linear density comprised between 300 dtex and 3500 dtex.

6. Textile reinforcing cord (10') according to any one of the previous claims, wherein said first filaments (201a) have a tenacity greater than, or equal to, 5 cN/dtex.

7. Textile reinforcing cord (10') according to any one of the previous claims, wherein said textile reinforcing cord (10') has an elongation at break greater than, or equal to, 12%, measured in accordance with the BISFA standard.

8. Textile reinforcing cord (10') according to any one of the previous claims, wherein said textile reinforcing cord (10') has a number of twists per metre (tpm) lower than, or equal to, 350.

9. Textile reinforcing cord (10') according to any one of the previous claims, wherein said textile reinforcing cord (10') has a thermal shrinkage lower than, or equal to, 3%, measured in accordance with the standard ASTM D4974.

10. Textile reinforcing cord (10') according to any one of the previous claims, wherein at least another yarn of said at least two yarns (20a, 20b) is identical to said texturized yarn (210).

11. Tyre (100) for vehicle wheels, comprising at least one structural component including a plurality of textile reinforcing cords (10'), wherein at least some of said textile reinforcing cords (10') are according to any one of the previous claims.

12. Tyre (100) according to claim 11, wherein said at least one structural component is a carcass ply (111) and/or a zero degrees reinforcing layer (106c).

## Patentansprüche

1. Textilverstärkungscord (10'), umfassend mindestens zwei miteinander verdrillte Garne (20a, 20b), wobei mindestens eines der mindestens zwei Garne (20a, 20b) ein texturiertes Garn (210) ist, das eine Vielzahl von ersten Filamenten (201a), die aus einem recycelten Kunststoffmaterial hergestellt sind, gemischt mit einer Vielzahl von zweiten Filamenten (202a), die aus einem nicht recycelten Kunststoffmaterial hergestellt sind, umfasst.

2. Textilverstärkungscord (10') nach Anspruch 1, wobei das recycelte Kunststoffmaterial PET ist.

3. Textilverstärkungscord (10') nach einem der vorstehenden Ansprüche, wobei das nicht recycelte Kunststoffmaterial PET, das mindestens teilweise fossilen Ursprungs oder biobasiert ist, oder Nylon ist, das mindestens teilweise biobasiert ist.

4. Textilverstärkungscord (10') nach einem der vorstehenden Ansprüche, wobei die ersten Filamente (201a) in einem Anteil von mehr als oder gleich 50 Gew.-% bezogen auf das Gesamtgewicht des texturierten Garns (210) vorliegen.

5. Textilverstärkungscord (10') nach einem der vorstehenden Ansprüche, wobei das texturierte Garn (210) eine lineare Dichte zwischen 300 dtex und 3500 dtex aufweist.

6. Textilverstärkungscord (10') nach einem der vorstehenden Ansprüche, wobei die ersten Filamente (201a) eine Zähigkeit größer oder gleich 5 cN/dtex aufweisen.

7. Textilverstärkungscord (10') nach einem der vorstehenden Ansprüche, wobei das Textilverstärkungscord (10') eine Bruchdehnung größer oder gleich 12 %, gemessen nach der BISFA-Norm, aufweist.

8. Textilverstärkungscord (10') nach einem der vorstehenden Ansprüche, wobei das Textilverstärkungscord (10') eine Anzahl von Verdrillungen pro Meter (tpm) kleiner oder gleich 350 aufweist.

9. Textilverstärkungscord (10') nach einem der vorstehenden Ansprüche, wobei das Textilverstärkungscord (10') eine thermische Schrumpfung kleiner oder gleich 3 %, gemessen nach der Norm ASTM D4974, aufweist.

10. Textilverstärkungscord (10') nach einem der vorstehenden Ansprüche, wobei mindestens ein anderes Garn der mindestens zwei Garne (20a, 20b) identisch mit dem texturierten Garn (210) ist.

11. Reifen (100) für Fahrzeugräder, umfassend mindestens eine Strukturkomponente, die eine Vielzahl von Textilverstärkungscorden (10') beinhaltet, wobei mindestens einige der Textilverstärkungscorde (10') nach einem der vorstehenden Ansprüche sind.

12. Reifen (100) nach Anspruch 11, wobei die mindestens eine Strukturkomponente eine Karkassenlage (111) und/oder eine Null-Grad-Verstärkungsschicht (106c) ist.

## Revendications

1. Cordon de renfort textile (10') comprenant au moins deux fils (20a, 20b) torsadés ensemble, dans lequel au moins l'un desdits au moins deux fils (20a, 20b) est un fil texturé (210) comprenant une pluralité de premiers filaments (201a) constitués d'une matière plastique recyclée mélangée à une pluralité de seconds filaments (202a) constitués d'une matière plastique non recyclée.

2. Cordon de renfort textile (10') selon la revendication 1, dans lequel la matière plastique recyclée est du PET.

3. Cordon de renfort textile (10') selon l'une quelconque des revendications précédentes, dans lequel la matière plastique non recyclée est du PET au moins partiellement d'origine fossile ou biosourcé ou du nylon au moins partiellement biosourcé.

4. Cordon de renfort textile (10') selon l'une quelconque des revendications précédentes, dans lequel les premiers filaments (201a) sont dans une proportion supérieure ou égale à 50 % en poids par rapport au poids total du fil texturé (210).

5. Cordon de renfort textile (10') selon l'une quelconque des revendications précédentes, dans lequel le fil texturé (210) présente une masse linéique comprise entre 300 dtex et 3 500 dtex.

6. Cordon de renfort textile (10') selon l'une quelconque des revendications précédentes, dans lequel lesdits premiers filaments (201a) présentent une ténacité supérieure ou égale à 5 cN/dtex.

7. Cordon de renfort textile (10') selon l'une quelconque des revendications précédentes, dans lequel ledit cordon de renfort textile (10') présente un allongement à la rupture supérieur ou égal à 12 %, mesuré conformément à la norme BISFA.

8. Cordon de renfort textile (10') selon l'une quelconque des revendications précédentes, dans lequel ledit cordon de renfort textile (10') présente un nombre de torsions par mètre (tpm) inférieur ou égal à 350.

9. Cordon de renfort textile (10') selon l'une quelconque des revendications précédentes, dans lequel ledit cordon de renfort textile (10') présente un rétrécissement thermique inférieur ou égal à 3 %, mesuré conformément à la norme ASTM D4974.

10. Cordon de renfort textile (10') selon l'une quelconque des revendications précédentes, dans lequel au moins un autre fil parmi lesdits au moins deux fils (20a, 20b) est identique audit fil texturé (210).

11. Pneu (100) pour roues de véhicule, comprenant au moins un composant structurel incluant une pluralité de cordons de renfort textile (10'), dans lequel au moins certains desdits cordons de renfort textile (10') sont conformes à l'une quelconque des revendications précédentes.

12. Pneu (100) selon la revendication 11, dans lequel ledit au moins un composant structurel est une nappe de carcasse (111) et/ou une couche de renfort à zéro degré (106c).
